# EUROPÄISCHE PATENTANMELDUNG

(11) **EP 1 707 865 A2**
(43) Veröffentlichungstag der Anmeldung: **04.10.2006**
(21) Anmeldenummer: 06002694.5
(22) Anmeldetag: 10.02.2006
(51) Int. Cl.: F16L 59/08, B60R 13/08, F01N 7/14

(54) **Abschirmteil, insbesondere Hitzeschild**

(30) Priorität: 02.04.2005 DE 102005015244
(71) Anmelder: ElringKlinger AG, 72581 Dettingen (DE)
(72) Erfinder: Beutter, Ulrich, 72766 Reutlinen-Reicheneck (DE); Stauber, Harald, 90513 Zrindorf (DE)
(74) Vertreter: Bartels & Partner

(57) **Zusammenfassung**

Die Erfindung betrifft ein Abschirmteil, insbesondere Hitzeschild, bestehend aus zumindest teilweise übereinanderliegenden, flächig ausgebildeten Schirmteilen (10,12), die zumindest teilweise entlang mindestens einer gemeinsamen Verbindungslinie (16) miteinander verbunden sind, wobei entlang der gemeinsamen Verbindungslinie (16) mindestens ein Schirmteil (14) ein anderes Schirmteil (10,12) in einem Übergriff umfaßt. Dadurch, dass innerhalb des Übergriffs zumindest teilweise die Schirmteile (10,12) reibschlüssig um eine Ausgleichsstrecke relativ gegeneinander verschiebbar gehalten sind, ist eine starre Verbindung der Schirmteile mit ihren Einzellagen vermieden und vielmehr können diese in Abhängigkeit von der thermischen Situation gegenseitig aneinander abgleiten.

## Beschreibung

Die Erfindung betrifft ein Abschirmteil, insbesondere Hitzeschild, bestehend aus zumindest teilweise übereinanderliegenden, flächig ausgebildeten Schirmteilen, die zumindest teilweise entlang mindestens einer gemeinsamen Verbindungslinie miteinander verbunden sind, wobei entlang der gemeinsamen Verbindungslinie mindestens ein Schirmteil ein anderes Schirmteil in einem Übergriff umfaßt.

Während die Wärmeentwicktung, beispielsweise eines sparsamen leistungsoptimierten Dieselmotors, am Zylinderkurbelwellengehäuse sehr gering sein kann, gilt das für "heiße Zonen", wie bei Krümmer, Turbolader, Katalysator etc., keineswegs. Durch die immer kompaktere Konstruktion der Motoren geraten zunehmend Komponenten in enge Nachbarschaft, die thermisch nicht "kompatibel" sind. Demgemäß ist es notwendig, mit sog. Äbschirmteilen, wie Hitzeschildern, thermische Motorenkomponenten gegenüber angrenzenden wärmeempfindlichen Aggregaten, wie Sensoren, Kraftstoff leitungen, Druckdosen, Karosserieteilen etc., zu schützen. Die Situation wird durch den Kompaktbau auch insofern verschärft, dass die hohe Packungsdichte der Aggregate den kühlenden Luftstrom im Motorraum einengt. Auch Lärmschutzmaßnahmen können dazu mit beitragen. So können beispielsweise Kunstoffbodenplatten, die den Schallaustritt vom Motorraum zur Fahrbahn vermindern sollen, unter Umständen eine wirkungsvolle Isolation erzeugen, mit der Wärme im Motorraum eingeschlossen wird. Katalysatoren zählen wegen ihrer phasenweisen hohen Oberflächentemperatur zu den Hitzequellen, die den Einsatz von schützenden Schildbarrieren jedenfalls erforderlich machen können. Ein typisches Beispiel hierfür sind konstruktive Maßnahmen, wie die Positionierung des Katalysators dicht am Krümmer. Dieses Bauprinzip, das der schnellen Aufheizung des Katalysators und damit der Emissionsminderung in der Kaltstartphase dient, verlegt eine starke Hitzequelle in den Motorraum, wo sich zahlreiche Aggregate auf engem Raum drängen. Jedenfalls eine Ursache für die wachsende Bedeutung von Abschirmteilen, wie Hitzeschildern, ist der Trend zum Einsatz von Thermoplasten. Die hervorragend formbaren, leichten und wirtschaftlichen Werkstoffe setzen sich im Motorraum zusehends durch, erfordern aber ein besonderes Augenmerk im Hinblick auf die Umgebungstemperaturen am Einsatzort bezogen auf sonstige thermische Motorenteile (Neue Werkstoffe und Entwicklungs-Tools für den Hitzeschutz in MTZ 12/2001, Jahrg.72, Seite 1044ff).

Durch die DE 102 47 641 B3 ist ein Strukturbauteil bekannt, insbesondere in Form eines schalldämpfenden Abschirmteils, als Bauteil eines Kraftfahrzeuges. Um bei dem bekannten Abschirmteil die Schalldämmung zu verbessern, besteht dieses aus zumindest teilweise übereinanderliegenden, flächig ausgebildeten Schirmteilen, die zwischen sich eine isolierende Zwischenschicht aufnehmen und die zur festen Verbindung miteinander außenumfangsseitig entlang einer gemeinsamen Verbindungslinie miteinander verbunden sind, indem in der Art einer Umbördelung das eine Schirmteil unter Übergriff der isolierenden Zwischenschicht das andere Schirmteil in demselben Übergriff umfaßt. Die dahingehend bekannte Formschlußverbindung legt die einzelnen Lagen oder Schirmteile relativ zueinander unbewegbar fest und aufgrund der derart starr hergestellten Verbindung kann es insbesondere bei thermischen Ausdehnungsvorgängen für das Abschirmteil zu Problemen bei dessen Festlegung kommen, insbesondere wenn, wie bei der genannten bekannten Lösung, das Abschirmteil über randseitig angreifende, winkelförmige Bügelschenkel innerhalb des Motorraumes an dortigen feststehenden Teilen festgelegt ist. Neben einem eventuellen Aufwerfen des mehrlagigen Abschirmteils mit gegebenenfalls Beulen und Einreißen des Hitzeschildmaterials, was zum Versagen des Abschirmteils führen kann, ist auch nicht auszuschließen, dass die winkelförmigen Bügelschenkel als Festlegemittel sich über die vorgesehene Schraubenverbindung von den Motorenbaukomponenten lösen und dergestalt das Abschirmteil freigeben, was entsprechende Reparatur- und Wartungsarbeiten nach sich ziehen kann. Auch ist die bekannte Lösung teuer in der Realisierung, da zur Festlegung winkelförmige Bügelschenkel zusätzlich bereit zu stellen sind, was auch den Montageaufwand in Produktionslinien von Kraftfahrzeugen erhöht.

Ausgehend von diesem Stand der Technik liegt der Erfindung die Aufgabe zugrunde, die bekannten Lösungen unter Beibehalten ihrer Vorteile, nämlich eine sehr gute Schall- und Wärmeisolation sicherzustellen, dahingehend weiter zu verbessern, dass auch bei starker thermischer Beanspruchung ein funktionssicherer Gebrauch sichergestellt ist und dass weniger Einbauraum benötigt wird bei gleichzeitig erhöhter Steifigkeit sowie Festigkeit. Eine dahingehende Aufgabe löst ein Abschirmteil mit den Merkmalen des Patentanspruches 1 in seiner Gesamtheit.

Dadurch, dass gemäß dem kennzeichnenden Teil des Patentanspruches 1 innerhalb des Übergriffs zumindest teilweise die Schirmteile reibschlüssig um eine Ausgleichsstrecke relativ gegeneinander verschiebbar gehalten sind, ist eine starre Verbindung der Schirmteile mit ihren Einzellagen vermieden und vielmehr können diese in Abhängigkeit von der thermischen Situation gegenseitig aneinander "abgleiten", ohne dass hierdurch die Verbindung entlang der gemeinsamen Verbindungslinie beeinträchtigt wäre. Aufgrund der zugelassenen relativen Verschiebebewegung der Schirmteile zueinander sind Beuleffekte an den Schirmteilen vermieden und diese reißen nicht ein; auch nicht im Bereich ihrer Festlegung an sonstigen Maschinen- oder Fahrzeugteilen. Da bei jeder thermischen Situation und in jedem Festlegezustand die reibschlüssige Verbindung der Schirmteile mit der Verschiebemöglichkeit erhalten bleibt, läßt sich das erfindungsgemäße Abschirmteil auch in solchen thermisch beanspruchten Zonen einsetzen, beispielsweise unmittelbar im Dichtungsbereich einer Zylinderkopfdichtung, wo der bisherige Einsatz von dahingehenden Schirmteilen nicht möglich war.

Die angesprochene Reibschlußverbindung, die durch den formschlüssigen Übergriff entlang der Verbindungslinie mittels der jeweiligen Schirmteile erreicht ist, stellt darüber hinaus sicher, dass auf zusätzliche Befestigungsmittel verzichtet werden kann und das genannte Abschirmteil läßt sich unmittelbar über Festlegemittel, wie Schrauben od. dgl., an sonstigen Maschinen- und Motorenteilen festlegen. Da, wie dargelegt, auf zusätzliche Befestigungsmittel, wie winkelförmige Bügelschenkel, verzichtet werden kann, kommt man bei der Montage des Abschirmteils ohne Zusatzteile aus, was den Herstell- und Montageaufwand entsprechend kostenmäßig reduzieren hilft. Auch ist durch den Einsatz von mehreren Schildteilen ein steifer und hochfester Abschirmteilaufbau erreicht.

Mit dem erfindungsgemäßen Abschirmteil ist es erstmals möglich, ein übliches, mehrlagiges Hitzeschild mit einer Dichtung zu versehen, die in heißen Bereichen einen Fluiddurchtritt durch das Abschirmteil abdichten hilft, wobei im Sinne einer statischen Dichtung die Dichtfunktion vollumfänglich erhalten bleibt, auch wenn thermisch bedingt die Schirmteile und deren Lagen sich relativ zueinander bewegen sollten.

Weitere vorteilhafte Ausführungsformen des erfindungsgemäßen Abschirmteils sind Gegenstand der sonstigen Unteransprüche.

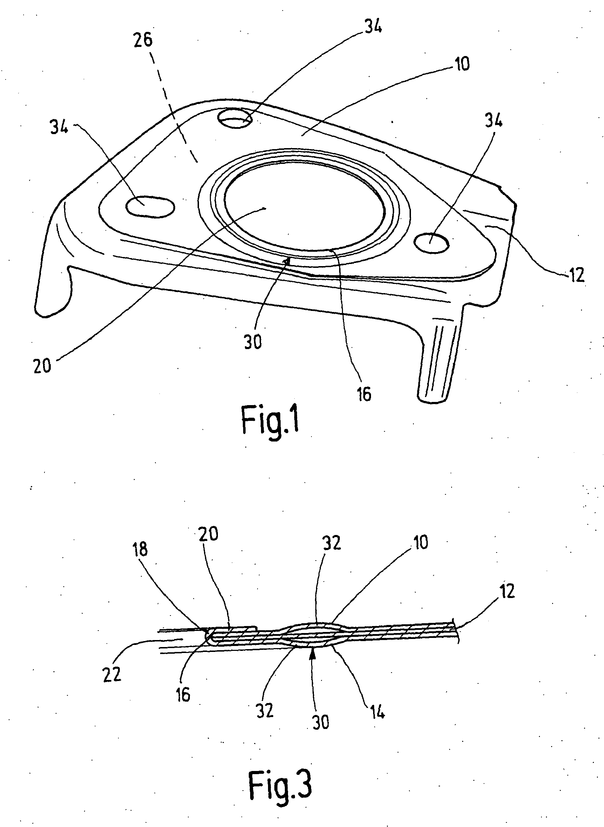

Im folgenden wird das erfindungsgemäße Abschirmteil anhand eines Ausführungsbeispiels nach der Zeichnung näher erläutert. Dabei zeigen in prinzipieller und nicht maßstäblicher Darstellung die
- Fig. 1: eine perspektivische Draufsicht auf das Abschirmteil;
- Fig. 2: eine perspektivische Unteransicht auf das Abschirmteil und
- Fig. 3: einen Schnitt längs der Linie II - II nach der Fig.2.

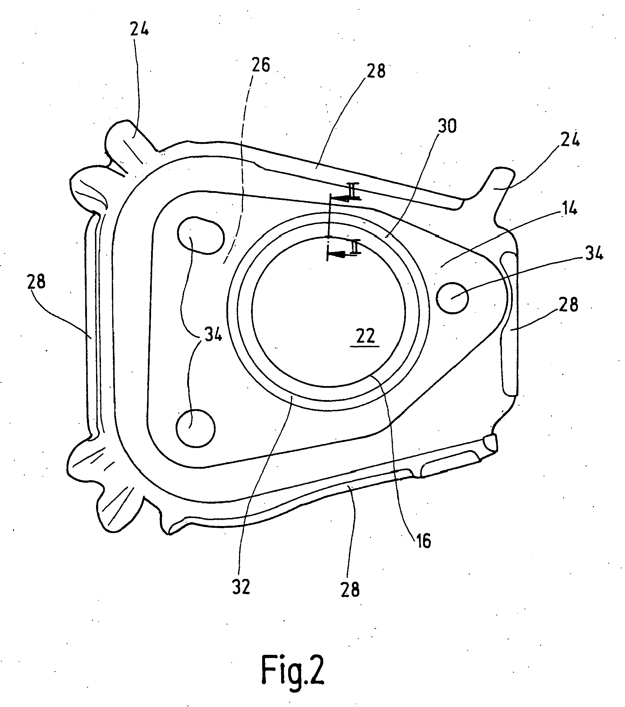

Das erfindungsgemäße Abschirmteil ist insbesondere in der Art eines Hitzeschildes ausgebildet und besteht zumindest im Mittenbereich aus zumindest teilweise flächig übereinanderliegenden, einzelnen Schirmteilen 10,12,14. Die dahingehenden Schirmteile 10,12,14 sind entlang einer gemeinsamen Verbindungslinie 16 miteinander verbunden, wobei entlang dieser gemeinsamen Verbindungslinie 16 das in Fig.2 gezeigte untere Schirmteil 14 das mittlere Schirmteil 12 sowie das obere Schirmteil 10 randseitig in einem Übergriff 18 (vgl. Fig.3) umfaßt. Der Übergriff 18 ist insbesondere dadurch hergestellt, dass das untere Schirmteil 14 entlang eines innenumfangsseitigen Endes mit seinem freien Rand um eine vorgebbare Randfassung umgelegt ist und die dahingehende Randfassung 20 gibt im wesentlichen eine definierte Ausgleichsstrecke vor, um die die Schirmteile 10,12,14 reibschlüssig gegeneinander verschiebbar gehalten sind, um derart thermisch auftretende Ausdehnungen zumindest im Bereich der Verbindung zu kompensieren.

Wie sich des weiteren aus den Figuren ergibt, hat die genannte Verbindungslinie 16 einen bogenförmigen Verlauf und umfaßt insbesondere eine kreisrunde Durchgriffsöffnung 22, die durch alle Schirmteile 10,12,14 hindurchgeht und die dem möglichen Durchtritt eines Fluidstromes dient, der auch gasförmig sein kann.

Das im Mittenbereich von den beiden Schirmteilen 10,14 begrenzte mittlere Schirmteil 12 ist vorzugsweise als Blechumformteil ausgebildet und weist zumindest teilweise randseitig umgebogene Abdeckflächen 24 auf, die mit dazu beitragen, eine thermische und/oder Schallisolierung sicher zu stellen. Das dahingehend mittlere Schirmteil 12 ist mehrlagig, insbesondere dreilagig, aufgebaut, wobei zwei Blechdecklagen eine nicht näher dargestellte isolierende Zwischenschicht zwischen sich aufnehmen können und dergestalt überdecken. Der Aufbau dahingehender Hitzeschilder ist üblich und beispielsweise in der nachveröffentlichten DE 10 2004 030 621 beschrieben, so dass an dieser Stelle hierauf nicht mehr näher eingegangen wird. Damit die beiden Blechdecklagen des mittleren Schirmteils 12 fest aneinander halten, ist außenumfangsseitig vorgesehen, dass zumindest teilweise die obere Blechdecklage die untere Blechdecklage mittels einer Bördelung 28 übergreift, die der einfacheren Darstellung wegen in der Fig.2 nur teilweise wiedergegeben ist. Die beiden äußeren Schirmteile 10,14 sind im wesentlichen aus gleichen ebenen Blechzuschnitten gebildet und liegen insbesondere im Montagezustand des Abschirmteils eben entlang der jeweiligen Anlagefläche 26 an dem mittleren Schirmteil 12 an, das in allen Richtungen eine größere Ausdehnung hat als der Außenumfangsrand des jeweiligen Schirmteils 10,14, der insoweit die Begrenzung für diese Schirmteile bildet.

Wie sich des weiteren aus den Figuren ergibt, erfolgt der Übergriff 18 entlang der die Durchgriffsöffnung 22 bildenden Verbindungslinie 16, wobei neben dem insbesondere in der Fig.3 aufgezeigten Übergriff 18 die Schirmteile 10,14 eine Dichtung 30 in der Art einer Ringdichtung ausbilden, indem die beiden Schirmteile 10,14 gegenüber ihrer sonstigen Flächenausdehnung einen axialen Überstand 32 aufweisen, der durch die Einprägung einer ringförmigen Sicke (vgl.Fig.3) erzeugt ist. In Abhängigkeit der gewünschten Dichtfunktion und Ausbildung der Dichtung besteht auch die Möglichkeit, die aufgezeigten Überstände 32 radial zueinander versetzt anzuordnen oder nur ein Schirmteil 10,14 mit dem Überstand 32 zu versehen. Der einfacheren Darstellung wegen ist in der Fig.3 das mittlere Schirmteil 12 nur einlagig dargestellt, wobei dem Grunde nach die Möglichkeit einer dahingehenden Ausgestaltung von Schirmteilen 10,12,14 mit insgesamt nur drei Blechlagen möglich ist; ebenso eine Ausgestaltung, bei der nur zwei Schirmteile 10,12 das in Rede stehende Abschirmteil bilden.

Aufgrund der angeführten Reibschlußverbindung der einzelnen Schirmteile 10,12,14 zueinander bleibt auch bei thermischer Beanspruchung eine relative Position der Schirmteile zueinander derart erhalten, dass die Dichtung 30 ihre Funktion im Betrieb erfüllen kann, auch bei hoher thermischer Beanspruchung. Da der jeweilige, die Dichtung 30 bildende Überstand 32 einstückiger Bestandteil des Schirmteils 10 sowie des Schirmteils 14 ist, bleibt im Montagezustand des Abschirmteils das mittlere Schirmteil 12 in seiner Einbaulage und relativ zu dieser stationären Einbaulage verschieben sich die beiden miteinander verbundenen Schirmteile 10,14 richtungskonform in den jeweils selben Richtungen. Da der Übergriff 18 im Bereich der Randfassung 20 gemäß der Darstellung nach der Fig.3 vierlagig ist und unabhängig von der Lagenanzahl im Hinblick auf die Umbördelung des unteren Schirmteils 14 immer eine Lage mehr aufweist als der Lagenverbund im Bereich der Dichtung 30, ist durch den genannten Übergriff 18 eine Art Stopperfunktion für die Dichtung 30 dergestalt erreicht, dass diese bei Beanspruchung nicht derart axial zusammengestaucht werden kann, als dass diese die Dichtfunktion aufgeben könnte, da der dahingehende etwaige Stauchvorgang durch den maximal vorgesehenen Dickenbereich definiert durch die Dicke der Einzellagen im Stopperbereich des Übergriffs 18 begrenzt ist. Dergestalt wäre das erfindungsgemäße Abschirmteil auch als Zylinderkopfdichtung mit Hitzeschildwirkung einsetzbar. Vorzugsweise umschließt die Ringdichtung 30 den Übergriff 18 mit seiner Randfassung 20 im gleichen radialen Abstand, wobei die Dichtung 30 auch anders ausgestaltet sein könnte, beispielsweise dergestalt, dass mehrere Dichtungsringe 30 in konzentrischer Anordnung die Fluiddurchgriffsöffnung 22 umfassen.

Die einzelnen Schirmteile 10,12,14 weisen deckungsgleich weitere Durchgriffsöffnungen 34 auch in der Form eines Langloches auf, wobei die dahingehenden weiteren Durchgriffsöffnungen 34 dem Festlegen des Abschirmteils an Motoren- oder Maschinenkomponenten mittels üblicher Festlegemittel, wie Schrauben, dienen.

Mit der erfindungsgemäßen Lösung ist jedenfalls sichergestellt, dass nicht ungewollt sich einzelne Befestigungspunkte vom Abschirmteil lösen oder dass Risse am Abschirmteil aufgrund von Wärmespannungen auftreten können. Aufgrund der möglichen Verschiebebewegung der Einzellagen ist die Dichtfunktion über die Dichtung 30 in jeder Arbeitssituation gesichert und dergestalt eine sichere Abdichtung der Durchgriffsöffnung 22 erreicht, so dass der zu führende Fluidstrom seine Fluidführung beibehält und nicht in die Umgebung austreten kann.

## Patentansprüche

1. Abschirmteil, insbesondere Hitzeschild, bestehend aus zumindest teilweise übereinanderliegenden, flächig ausgebildeten Schirmteilen (10,12,14), die zumindest teilweise entlang mindestens einer gemeinsamen Verbindungslinie (16) miteinander verbunden sind, wobei entlang der gemeinsamen Verbindungslinie (16) mindestens ein Schirmteil (14) ein anderes Schirmteil (10,12) in einem Übergriff (18) umfaßt, **dadurch gekennzeichnet, dass** innerhalb des Übergriffs (18) zumindest teilweise die Schirmteile (10,12,14) reibschlüssig um eine Ausgleichsstrecke relativ gegeneinander verschiebbar gehalten sind.

2. Abschirmteil nach Anspruch 1, **dadurch gekennzeichnet, dass** die Verbindungslinie (16) einen bogenförmigen Verlauf hat und insbesondere eine Durchgriffsöffnung (22) umfaßt, die durch alle Schirmteile (10,12,14) geht.

3. Abschirmteil nach Anspruch 1 oder 2, **dadurch gekennzeichnet, dass** ein mittleres Schirmteil (12) als Umformteil ausgebildet mit zumindest teilweise randseitig umgebogenen Abdeckflächen (24) versehen ist und dass zwei äußere Schirmteile (10,14) gleichen Zuschnitts das mittlere Schirmteil (12) entlang einer gemeinsamen Anlagefläche (26) zwischen sich aufnehmen.

4. Abschirmteil nach Anspruch 3, **dadurch gekennzeichnet, dass** der Übergriff (18) entlang der die Durchgriffsöffnung (22) umfassenden Verbindungslinie (16) erfolgt, indem ein äußeres Schirmteil (14) das mittlere (12) und das weitere äußere Schirmteil (10) umgreift.

5. Abschirmteil nach einem der Ansprüche 2 bis 4, **dadurch gekennzeichnet, dass** weitere Durchgriffsöffnungen (34) deckungsgleich die jeweiligen Schirmteile (10,12,14) durchgreifen.

6. Abschirmteil nach einem der Ansprüche 3 bis 5, **dadurch gekennzeichnet, dass** das mittlere Schirmteil (12) mehrlagig, insbesondere mit einer isolierenden Zwischenschicht versehen ist, und dass die beiden äußeren Schirmteile (10,14) einlagig in der Art von Blechzuschnitten ausgebildet sind.

7. Abschirmteil nach einem der Ansprüche 1 bis 6, **dadurch gekennzeichnet, dass** neben dem Übergriff (18) zumindest teilweise die Schirmteile (10,14) eine Dichtung (30) ausbilden, indem mindestens ein Schirmteil (10,14) gegenüber seiner sonstigen Flächenausdehnung einen Überstand (32) aufweist.

8. Abschirmteil nach Anspruch 7, **dadurch gekennzeichnet, dass** der Überstand (32) als Ringdichtung und an den ringförmigen Übergriff (18) anschließend ausgebildet ist.

9. Abschirmteil nach Anspruch 7 oder 8, **dadurch gekennzeichnet, dass** der Übergriff (18) mindestens eine Lage an Schirmteilen (10,12,14) mehr aufweist als die Dichtung (30).

10. Abschirmteil nach einem der Ansprüche 7 bis 9, **dadurch gekennzeichnet, dass** die Dichtung (30) den Übergriff (18) im gleichen Abstand umschließt.
